(19) Europäisches Patentamt
European Patent Office
Office européen des brevets

(11) EP 1 783 939 A1

(12) **DEMANDE DE BREVET EUROPEEN**

(43) Date de publication:
**09.05.2007 Bulletin 2007/19**

(51) Int Cl.:
***H04J 11/00*** *(2006.01)*

(21) Numéro de dépôt: **05300897.5**

(22) Date de dépôt: **07.11.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(71) Demandeur: **Alcatel Lucent**
**75008 Paris (FR)**

(72) Inventeurs:
- **Clerino, Antoine,**
**Alcatel Alenia Space Toulouse**
**31037 Toulouse Cedex 01 (FR)**
- **Peyrotte, Christian**
**31100 Toulouse (FR)**

(74) Mandataire: **Hedarchet, Stéphane**
**Alcatel Lucent**
**Intellectual Property & Standards**
**54 rue La Boétie**
**75008 Paris (FR)**

(54) **Dispositif de génération de séquences d'éléments de codage pour un équipement de transmission d'un réseau de communication de type CDMA**

(57) Un dispositif (D) est dédié à la génération de séquences d'éléments de codage de signaux au sein d'un équipement de transmission de signaux (ET) d'un réseau de type CDMA. Ce dispositif (D) comprend des moyens de calcul (MC) chargés i) de constituer une matrice intermédiaire ($M_K$) de type 2x2, de rang K, où K est une valeur entière impaire choisie supérieure ou égale à 1, et comportant quatre éléments matriciels ($X_K$, $Y_K$, $Z_K$, $U_K$) constitués chacun d'une autre matrice intermédiaire de type 2x2, de rang K-1, avec

$$X_K = \begin{pmatrix} X_{K-1} & X_{K-1} \\ X_{K-1} & -X_{K-1} \end{pmatrix}, \quad Y_K = \begin{pmatrix} Y_{K-1} & -Y_{K-1} \\ -Y_{K-1} & -Y_{K-1} \end{pmatrix}, \quad Z_K = \begin{pmatrix} Z_{K-1} & -Z_{K-1} \\ -Z_{K-1} & -Z_{K-1} \end{pmatrix},$$

$$U_K = \begin{pmatrix} U_{K-1} & U_{K-1} \\ U_{K-1} & -U_{K-1} \end{pmatrix},$$

$X_1 = 1$, $Y_1 = -1$, $Z_1 = 1$, et $U_1 = 1$, puis ii) de transformer la matrice intermédiaire ($M_K$) de type 2x2 de rang K en une matrice finale ($M'_K$) de type NxN de rang K, avec $N=2^K$, dans laquelle chaque élément associé à l'une des N lignes et l'une des N colonnes est une valeur, et iii) de délivrer N séquences orthogonales entre elles, comportant chacune N éléments de codage constitués respectivement par les valeurs des éléments contenus dans l'une des N lignes de la matrice finale ($M'_K$). Chaque séquence peut alors servir à étaler les spectres de signaux, associés à des liens de communication différents, avant qu'ils ne soient modulés puis transmis.

EP 1 783 939 A1



**(Cont. page suivante)**

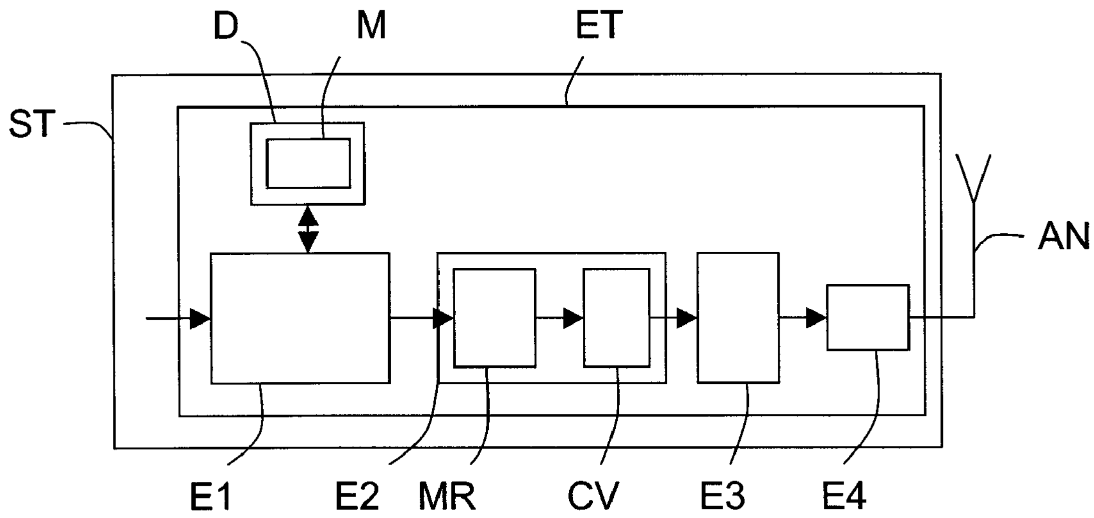


Figure unique

## Description

L'invention concerne les réseaux de communication à accès multiple par répartition de codes, et plus précisément les dispositifs qui sont utilisés dans de tels réseaux pour générer des séquences d'éléments de codage permettant d'étaler les spectres de signaux avant de les moduler puis de les transmettre.

Comme le sait l'homme de l'art, dans les réseaux dits à accès multiple par répartition de codes ou (CDMA pour « Code Division Multiple Access » - défini par le standard IS-95), les signaux, qui sont associés à un canal de communication et qui doivent être transmis par un équipement de transmission, font l'objet d'un étalement de leur spectre au moyen de séquences d'éléments de codage généralement orthogonales entre elles, après avoir fait l'objet d'un éventuel mélange (ou « scrambling » - mélange des données améliorant les performances des codes correcteurs d'erreurs), puis d'un codage correcteur d'erreur, et avant d'être modulés puis transmis.

Plusieurs familles de séquences ont été proposées pour étaler des signaux et optimiser l'occupation spectrale en maximisant le nombre de transmissions simultanées sur la bande d'étalement. C'est notamment le cas des séquences de codes de Gold et des séquences de codes de Walsh-Hadamard.

Les séquences de codes de Gold sont faciles à générer et offrent d'assez bonnes (bien que non idéales) performances en termes d'auto-corrélation et de corrélation croisée lorsque l'on ne tient pas compte de l'impact des données auxquelles elles sont surimposées. Les données modifient les valeurs d'auto-corrélation et de corrélation croisée entre la séquence reçue surimposée aux données et la séquence attendue.

Les séquences de codes de Walsh-Hadamard offrent une isolation (orthogonalité) quasi-parfaite entre séquences lorsque le réseau CDMA est parfaitement synchronisé. Mais comme on le verra plus loin, elles présentent un inconvénient important pouvant nuire à la synchronisation.

Pour générer des séquences de codes de Walsh-Hadamard on procède schématiquement en trois étapes. Une première étape consiste à constituer une matrice intermédiaire ($M_K$) de type 2x2, de rang K, où K est une valeur entière choisie supérieure ou égale à 1, et comportant quatre éléments matriciels qui sont chacun constitués d'une matrice intermédiaire ($M_{K-1}$) de rang K-1. On a plus précisément

$$M_K = \begin{pmatrix} M_{K-1} & M_{K-1} \\ M_{K-1} & -M_{K-1} \end{pmatrix}, \text{ avec}$$

$$M_1 = \begin{pmatrix} 1 & 1 \\ 1 & -1 \end{pmatrix}.$$

Une deuxième étape consiste à transformer la matrice intermédiaire $M_K$ (de type 2x2) de rang K en une matrice finale de type NxN de rang K, avec $N=2^K$, dans laquelle chaque élément associé à l'une des N lignes et l'une des N colonnes est une valeur. Une troisième étape consiste à délivrer N séquences orthogonales entre elles, comportant chacune N éléments de codage constitués respectivement par les valeurs des éléments qui sont contenus dans l'une des N lignes (ou N colonnes) de la matrice primaire ($M_K$).

Par exemple, lorsque K=2 on obtient les quatre séquences suivantes, généralement orthogonales entre elles, $S_{1/4}$ = (1,1,1,1), $S_{2/4}$ = (1,-1,1,-1), $S_{3/4}$ = (1,1,-1,-1) et $S_{4/4}$ = (1,-1,-1,1). Les séquences $S_{2/4}$, $S_{3/4}$ et $S_{4/4}$ peuvent être utilisées pour étaler les spectres de signaux associés à trois liens de communication différents, avant qu'ils ne soient modulés, puis transmis. La séquence $S_{1/4}$ correspondant en quelque sorte à la fonction identité, elle n'est pas utilisée du fait qu'elle ne permet pas d'étaler le spectre d'un signal.

Les séquences de codes de Walsh-Hadamard ont une médiocre fonction d'auto-corrélation, même lorsque l'on ne tient pas compte de l'impact des données auxquelles elles sont surimposées (des pics secondaires peuvent avoir le même niveau qu'un pic principal), ce qui pose problème lors des phases d'acquisition, notamment lorsque le nombre N d'éléments de codage de la séquence est égal à 128, et donc nuit à la synchronisation. Il est en effet rappelé que plus les niveaux des pics secondaires d'auto-corrélation sont faibles, plus la probabilité de fausse acquisition est réduite.

Afin de réduire les niveaux des pics secondaires, on peut par exemple mélanger des séquences de codes de Walsh-Hadamard avec des séquences de codes de Gold étendues.

Un tel mélange permet en outre d'obtenir une très bonne fonction de corrélation croisée lorsque l'on tient compte de l'impact des données auxquelles les séquences mélangées sont surimposées, y compris lorsque le nombre N d'éléments de codage de la séquence est égal à 128, ce qui est important lors des phases de poursuite. Il est en effet rappelé que plus le niveau de corrélation croisée entre deux séquences est bas, plus l'on réduit le niveau d'interférence (MAI).

L'invention a pour but de permettre la génération de nouvelles familles de séquences d'éléments de codage présentant une très bonne fonction de corrélation croisée, à l'instar des séquences de codes de Walsh-Hadamard, et une fonction d'auto-corrélation dans laquelle les niveaux des pics secondaires sont très faibles, voire quasi-nuls, à l'instar des séquences de codes de Gold.

Elle propose à cet effet un dispositif dédié à la génération de séquences d'éléments de codage de signaux, pour un équipement de transmission de signaux d'un réseau de type CDMA, et comprenant des moyens de calcul chargés :

- de constituer une matrice intermédiaire ($M_K$) de type

2x2, de rang K, où K est une valeur entière choisie supérieure ou égale à 1, et comportant quatre éléments matriciels constitués chacun d'une autre matrice intermédiaire de type 2x2, de rang K-1, puis

- de transformer la matrice intermédiaire ($M_K$), de type 2x2 et de rang K, en une matrice finale ($M'_K$) de type NxN de rang K, avec $N=2^K$, dans laquelle chaque élément associé à l'une des N lignes et l'une des N colonnes est une valeur, et
- de délivrer N séquences orthogonales entre elles, comportant chacune N éléments de codage constitués respectivement par les valeurs des éléments qui sont contenus dans l'une des N lignes de la matrice finale ($M'_K$), et pouvant chacune servir à étaler les spectres de signaux, associés à des liens de communication différents, avant qu'ils ne soient modulés puis transmis.

Ce dispositif se caractérise par le fait que ses moyens de calcul sont chargés de constituer chaque matrice intermédiaire de rang K ($M_K$) au moyen d'une valeur K impaire et de quatre éléments matriciels ($X_K$, $Y_K$, $Z_K$, $U_K$) définis comme suit :

- $X_K = \begin{pmatrix} X_{K-1} & X_{K-1} \\ X_{K-1} & -X_{K-1} \end{pmatrix}$, avec $X_1 = 1$,
- $Y_K = \begin{pmatrix} Y_{K-1} & -Y_{K-1} \\ -Y_{K-1} & -Y_{K-1} \end{pmatrix}$, avec $Y_1 = -1$,
- $Z_K = \begin{pmatrix} Z_{K-1} & -Z_{K-1} \\ -Z_{K-1} & -Z_{K-1} \end{pmatrix}$, avec $Z_1 = 1$, et
- $U_K = \begin{pmatrix} U_{K-1} & U_{K-1} \\ U_{K-1} & -U_{K-1} \end{pmatrix}$, avec $U_1 = 1$.

Préférentiellement, les moyens de calcul peuvent être chargés de constituer des matrices intermédiaires de rang K de type $M_K = \begin{pmatrix} X_K & Y_K \\ Z_K & U_K \end{pmatrix}$.

Par ailleurs, les moyens de calcul peuvent être également chargés de déterminer des séquences de codes de Gold étendues, et de mélanger certaines au moins de ces séquences de codes de Gold étendues à certaines au moins des séquences d'éléments de codage.

L'invention propose également un équipement de transmission de signaux, pour un réseau de type CDMA, muni d'un dispositif de génération de séquences d'éléments de codage de signaux du type de celui présenté ci-avant.

L'invention propose en outre un procédé de génération de séquences d'éléments de codage de signaux, consistant en la suite d'étapes suivantes :

1) constituer une matrice intermédiaire ($M_K$) de type 2x2, de rang K, où K est une valeur entière impaire choisie supérieure à 1, et comportant quatre éléments matriciels ($X_K$, $Y_K$, $Z_K$, $U_K$) constitués chacun d'une autre matrice intermédiaire de type 2x2, de rang K-1, et définis comme suit :

- $X_K = \begin{pmatrix} X_{K-1} & X_{K-1} \\ X_{K-1} & -X_{K-1} \end{pmatrix}$, avec $X_1 = 1$,
- $Y_K = \begin{pmatrix} Y_{K-1} & -Y_{K-1} \\ -Y_{K-1} & -Y_{K-1} \end{pmatrix}$, avec $Y_1 = -1$,
- $Z_K = \begin{pmatrix} Z_{K-1} & -Z_{K-1} \\ -Z_{K-1} & -Z_{K-1} \end{pmatrix}$, avec $Z_1 = 1$, et
- $U_K = \begin{pmatrix} U_{K-1} & U_{K-1} \\ U_{K-1} & -U_{K-1} \end{pmatrix}$, avec $U_1 = 1$,

2) transformer la matrice ($M_K$) de type 2x2 de rang K en une matrice finale ($M'_K$) de type NxN de rang K, avec $N=2^K$, dans laquelle chaque élément associé à l'une des N lignes et l'une des N colonnes est une valeur, et

3) délivrer N séquences orthogonales entre elles, comportant chacune N éléments de codage constitués respectivement par les valeurs des éléments contenues dans l'une des N lignes de la matrice finale ($M'_K$), et pouvant chacune servir à étaler les spectres de signaux, associés à des liens de communication différents, avant qu'ils ne soient modulés puis transmis.

Lors de l'étape 2), on constitue préférentiellement une matrice intermédiaire de rang K de type

$$M_K = \begin{pmatrix} X_K & Y_K \\ Z_K & U_K \end{pmatrix}.$$

Par ailleurs, on peut également déterminer des séquences de codes de Gold étendues, et mélanger certaines au moins de ces séquences de codes de Gold étendues à certaines au moins des séquences d'éléments de codage déterminées à l'étape 3).

D'autres caractéristiques et avantages de l'invention apparaîtront à l'examen de la description détaillée ci-après, et du dessin annexé, sur lequel l'unique figure illustre de façon très schématique un équipement de transmission muni d'un exemple de réalisation d'un dispositif de génération de séquences d'éléments de codage de signaux, selon l'invention. Le dessin annexé pourra non seulement servir à compléter l'invention, mais aussi contribuer à sa définition, le cas échéant.

Dans ce qui suit, on considère à titre d'exemple non limitatif que le dispositif de génération de séquences

d'éléments de codage de signaux D, selon l'invention, fait partie d'un équipement de transmission ET, tel qu'un circuit de transmission de signaux (faisant lui-même éventuellement partie d'un circuit d'émission/réception (ou « transceiver »)), d'un terminal de communication ST d'un réseau de communication de type CDMA. Un tel terminal de communication ST est par exemple une station d'émission/réception (ou station de base) associée à au moins une cellule d'un réseau mobile (ou cellulaire).

Bien entendu, l'invention n'est pas limitée à cet exemple d'application. Elle concerne en effet tout type d'équipement de transmission destiné à assurer le traitement et la mise en forme de signaux associés à des liens de communication (et donc des utilisateurs) différents et devant être transmis, éventuellement par voie d'ondes (radiofréquence), après avoir été notamment mélangés par une éventuelle technique de scrambling, puis encodés, puis étalés au moyen d'une séquence d'éléments de codage CDMA, et modulés. L'invention s'applique donc également aux réseaux CDMA fixes implantés au sol.

Par ailleurs, le dispositif D selon l'invention peut être externe à l'équipement de transmission ET tout en lui étant couplé afin de l'alimenter en séquences d'éléments de codage.

Comme cela est schématiquement illustré sur l'unique figure, un équipement de transmission ET, tel qu'un circuit dédié à la transmission de signaux, comprend des premier E1, deuxième E2, troisième E3, et quatrième E4 étages couplés les uns aux autres.

Le premier étage E1 est un étage de traitement numérique, généralement en bande de base. Dans ce premier étage E1, chaque signal (à transmettre), fourni sous forme numérique par un autre circuit de la station d'émission/réception ST, fait l'objet notamment d'un encodage, puis d'un étalement de spectre au moyen d'une séquence d'éléments de codage (ou séquence de codes) fournie par un dispositif selon l'invention D.

Dans l'exemple non limitatif illustré sur l'unique figure, le dispositif D est externe au premier étage E1. Mais, dans une variante il pourrait être intégré à celui-ci.

Le deuxième étage E2 est également un étage de traitement numérique. Le signal numérique qui a été encodé et dont le spectre a été étalé, est tout d'abord modulé au moyen d'un modulateur MR, puis converti en signaux analogiques au moyen d'un convertisseur numérique/analogique CV.

Le troisième étage E3 est un étage de traitement analogique. Le signal analogique y est notamment filtré, et converti en signal radiofréquence (RF), en particulier s'il était jusqu'alors en bande de base.

Le quatrième étage E4 est un étage d'amplification de puissance qui alimente l'antenne de transmission AN de la station d'émission/réception ST.

Le dispositif de génération de séquences d'éléments de codage de signaux D, selon l'invention, comprend essentiellement un module de calcul MC.

Ce module de calcul MC est chargé de générer sur commande (ici du premier étage E1) des séquences orthogonales (ou quasi-orthogonales) d'éléments de codage. Pour ce faire, il procède en trois étapes.

Dans une première étape, le module de calcul MC constitue une matrice intermédiaire $M_K$, où K est une valeur entière choisie supérieure ou égale à 1 et désignant le rang de ladite matrice $M_K$.

Cette matrice intermédiaire $M_K$ comporte quatre éléments matriciels $X_K$, $Y_K$, $Z_K$ et $U_K$. Elle se présente donc sous la forme d'une matrice 2x2 du type de celle donnée ci-dessous :

$$M_K = \begin{pmatrix} X_K & Y_K \\ Z_K & U_K \end{pmatrix}.$$

Chaque élément matriciel de la matrice intermédiaire $M_K$ est constitué d'une matrice intermédiaire de type 2x2, de rang K-1 lorsque K est strictement supérieur à 1 (K>1), et d'une simple valeur lorsque K vaut 1.

Plus précisément, selon l'invention les éléments matriciels de la matrice intermédiaire $M_K$ sont définis comme indiqué ci-dessous :

- $X_K = \begin{pmatrix} X_{K-1} & X_{K-1} \\ X_{K-1} & -X_{K-1} \end{pmatrix}$, avec $X_1 = 1$,
- $Y_K = \begin{pmatrix} Y_{K-1} & -Y_{K-1} \\ -Y_{K-1} & -Y_{K-1} \end{pmatrix}$, avec $Y_1 = -1$,
- $Z_K = \begin{pmatrix} Z_{K-1} & -Z_{K-1} \\ -Z_{K-1} & -Z_{K-1} \end{pmatrix}$, avec $Z_1 = 1$, et
- $U_K = \begin{pmatrix} U_{K-1} & U_{K-1} \\ U_{K-1} & -U_{K-1} \end{pmatrix}$, avec $U_1 = 1$.

Dans une deuxième étape, le module de calcul MC détermine les quatre éléments matriciels $X_K$, $Y_K$, $Z_K$ et $U_K$ de la matrice intermédiaire $M_K$, dont la valeur entière impaire du rang K est généralement fixée en fonction de la capacité maximale du système, afin de constituer une matrice finale $M'_K$. Cela revient à transformer la matrice intermédiaire $M_K$ de type 2x2 (lorsqu'elle est vue par rapport à ses éléments matriciels) et de rang K, en une matrice finale $M'_K$ de type NxN de rang K, avec $N=2^K$. Le fait que N soit égal à $2^K$ résulte du fait que les quatre éléments matriciels de la matrice intermédiaire $M_K$ de rang K sont eux-mêmes des matrices intermédiaires de rang K-1 dont les éléments matriciels sont eux-mêmes des matrices intermédiaires de rang K-2, et ainsi de suite (pour des valeurs de K supérieures à 2).

La matrice finale $M'_K$ comporte donc N lignes et N colonnes, et ses $N^2$ éléments, qui sont chacun associés à l'une de ses N lignes et l'une de ses N colonnes, sont tous des valeurs égales à $X_1$, $Y_1$, $Z_1$ ou $U_1$ (c'est-à-dire égales à + 1 ou -1).

Les valeurs de K étant impaires, N (=$2^K$) prend donc des valeurs telles que 2 ($2^1$), 8 ($2^3$), 32 ($2^5$), 128 ($2^7$), etc.

On notera que la décomposition en première et deuxième étapes, ne reflète pas nécessairement le mode opératoire du module de calcul MC. Les première et deuxième étapes peuvent en effet être fusionnées.

Dans une troisième étape, le module de calcul MC délivre N séquences, notées $S_{iN}$ (avec i = 1 à N), orthogonales ou (quasi-)orthogonales entre elles, et comportant chacune N éléments de codage constitués respectivement par les valeurs des éléments qui sont contenus dans l'une des N lignes de la matrice finale $M'_K$.

L'orthogonalité entre séquences peut s'exprimer au moyen de la relation suivante :

$$S_{iN} * \left(S_{i'N}\right)^T = \sum_{m=1}^{N} S_{imN} * S_{i'mN} = N\delta_{ii'} ,$$

où, * représente le produit scalaire, T représente l'opérateur transposée, $S_{imN}$ représente le m-ième élément de codage de la séquence $S_{iN}$, et $\delta_{ii'}$ est le symbole de Kronecker qui est égal soit à 0 lorsque i est différent de i', soit à 1 lorsque i est égal à i'.

Par exemple, si K=3, alors N=8, et chaque séquence comporte 8 éléments de codage. Les 8 séquences $S_{18}$ à $S_{88}$ sont données ci-dessous :

- $S_{18}$ = (1,1,1,1,-1,1,1,-1),
- $S_{28}$ = (1,-1,1,-1,1,1,-1,-1),
- $S_{38}$ = (1,1,-1,-1,1,-1,1,-1),
- $S_{48}$=(1,-1,-1,1,-1,-1,-1,-1),
- $S_{58}$=(1,-1,-1,1,1,1,1,1),
- $S_{68}$ = (-1,-1,1,1,1,-1,1,-1),
- $S_{78}$=(-1,1,-1,1,1,1,-1,-1),
- $S_{88}$=(1,1,1,1,1,-1,-1,1).

Chacune des N séquences $S_{iN}$, délivrées par le dispositif D, peut alors être utilisée (ici par le premier étage E1 de l'équipement de transmission ET) pour étaler le spectre d'un signal à transmettre, associé à un canal de communication, avant qu'il ne soit modulé par le modulateur MR du deuxième étage E2.

Les nouvelles séquences d'éléments de codage (ou séquences de codes) $S_{iN}$, générées grâce à l'invention ont une assez bonne fonction d'auto-corrélation lorsque l'on tient compte de l'impact des données auxquelles elles sont surimposées (les pics secondaires ont en effet des niveaux inférieurs à ceux des pics principaux), y compris lorsque leur nombre N d'éléments de codage est égal à 128.

Comme c'est le cas lorsque l'on utilise des séquences de codes de Walsh-Hadamard, on peut réduire les niveaux des pics secondaires (de la fonction d'auto-corrélation) en mélangeant des nouvelles séquences d'éléments de codage $S_{iN}$ avec des séquences de codes de Gold étendues.

A cet effet, le module de calcul MC peut être également agencé de manière à déterminer classiquement des séquences de codes de Gold étendues. La méthode utilisée pour déterminer de telles séquences de codes de Gold étant bien connue de l'homme de l'art, elle ne sera pas décrite ici.

Dans ce cas, le dispositif D, et plus précisément son module de calcul MC, calcule à la fois des nouvelles séquences d'éléments de codage $S_{iN}$ et des séquences de codes de Gold étendues, présentant des nombres N identiques d'éléments de codage, puis choisit certaines de ces nouvelles séquences d'éléments de codage $S_{iN}$ et certaines de ces séquences de codes de Gold étendues, et enfin délivre en sortie un mélange des nouvelles séquences d'éléments de codage $S_{iN}$ et des séquences de codes de Gold étendues choisies. Le choix est par exemple prédéterminé en fonction d'études préalables.

Un tel mélange de séquences permet d'obtenir une très bonne fonction de corrélation croisée lorsque l'on tient compte de l'impact des données auxquelles les séquences mélangées sont surimposées, y compris lorsque le nombre N d'éléments de codage de la séquence est égal à 128.

Le dispositif de génération de séquences d'éléments de codage de signaux D selon l'invention, et notamment son module de calcul MC, peut être réalisé sous la forme de circuits électroniques, de modules logiciels (ou informatiques), ou d'une combinaison de circuits et de logiciels.

L'invention ne se limite pas aux modes de réalisation de dispositif de génération de séquences d'éléments de codage de signaux et d'équipement de transmission décrits ci-avant, seulement à titre d'exemple, mais elle englobe toutes les variantes que pourra envisager l'homme de l'art dans le cadre des revendications ci-après.

**Revendications**

1. Dispositif (D) de génération de séquences d'éléments de codage de signaux pour un équipement de transmission de signaux (ET) d'un réseau de communication à accès multiple par répartition de codes, ledit dispositif (D) comprenant des moyens de calcul (MC) agencés i) pour constituer une matrice intermédiaire ($M_K$) de type 2x2, de rang K, où K est une valeur entière choisie supérieure ou égale ou égale à 1, et comportant quatre éléments matriciels constitués chacun d'une autre matrice intermédiaire de type 2x2, de rang K-1, puis ii) pour transformer ladite matrice intermédiaire ($M_K$) de type 2x2 de rang K en une matrice finale ($M'_K$) de type NxN

de rang K, avec $N=2^K$, dans laquelle chaque élément associé à l'une des N lignes et l'une des N colonnes est une valeur, et iii) pour délivrer N séquences orthogonales entre elles, comportant chacune N éléments de codage constitués respectivement par les valeurs des éléments contenus dans l'une des N lignes de ladite matrice finale ($M'_K$), et propres chacune à servir à étaler les spectres de signaux, associés à des liens de communication différents, avant qu'ils ne soient modulés puis transmis, **caractérisé en ce que** lesdits moyens de calcul (MC) sont agencés pour constituer chaque matrice intermédiaire de rang K ($M_K$) au moyen d'une valeur K impaire et de quatre éléments matriciels ($X_K$, $Y_K$, $Z_K$, $U_K$) définis comme suit : - $X_K=\begin{pmatrix} X_{K-1} & X_{K-1} \\ X_{K-1} & -X_{K-1} \end{pmatrix}$, avec $X_1 = 1$, - $Y_K=\begin{pmatrix} Y_{K-1} & -Y_{K-1} \\ -Y_{K-1} & -Y_{K-1} \end{pmatrix}$, avec $Y_1 = -1$,

- $Z_K=\begin{pmatrix} Z_{K-1} & -Z_{K-1} \\ -Z_{K-1} & -Z_{K-1} \end{pmatrix}$, avec $Z_1 = 1$, et

- $U_K=\begin{pmatrix} U_{K-1} & U_{K-1} \\ U_{K-1} & -U_{K-1} \end{pmatrix}$, avec $U_1 = 1$.

**2.** Dispositif selon la revendication 1, **caractérisé en ce que** lesdits moyens de calcul (MC) sont agencés pour constituer des matrices intermédiaires de rang K de type $M_K=\begin{pmatrix} X_K & Y_K \\ Z_K & U_K \end{pmatrix}$.

**3.** Dispositif selon l'une des revendications 1 et 2, **caractérisé en ce que** lesdits moyens de calcul (MC) sont agencés pour déterminer des séquences de codes de Gold étendues, et pour mélanger certaines au moins desdites séquences de codes de Gold étendues à certaines au moins desdites séquences d'éléments de codage.

**4.** Equipement de transmission de signaux (ET) pour un réseau de communication à accès multiple par répartition de codes, **caractérisé en ce qu'**il comprend un dispositif de génération de séquences d'éléments de codage de signaux (D) selon l'une des revendications précédentes.

**5.** Procédé de génération de séquences d'éléments de codage de signaux, pour un équipement de transmission de signaux (ET) d'un réseau de communication à accès multiple par répartition de codes, consistant i) à constituer une matrice intermédiaire ($M_K$) de type 2x2, de rang K, où K est une valeur entière choisie supérieure ou égale à 1, et comportant quatre éléments matriciels constitués chacun d'une autre matrice intermédiaire de type 2x2, de rang K-1, puis ii) à transformer ladite matrice intermédiaire ($M_K$) de type 2x2 de rang K en une matrice finale ($M'_K$) de type NxN de rang K, avec $N=2^K$, dans laquelle chaque élément associé à l'une des N lignes et l'une des N colonnes est une valeur, et iii) à délivrer N séquences orthogonales entre elles, comportant chacune N éléments de codage constitués respectivement par les valeurs des éléments contenus dans l'une des N lignes de ladite matrice finale ($M'_K$), et propres chacune à servir à étaler les spectres de signaux, associés à des liens de communication différents, avant qu'ils ne soient modulés puis transmis, **caractérisé en ce qu'**au i) on constitue chaque matrice intermédiaire de rang K ($M_K$) au moyen d'une valeur K impaire et de quatre éléments matriciels ($X_K$, $Y_K$, $Z_K$, $U_K$) définis comme suit :

- $X_K=\begin{pmatrix} X_{K-1} & X_{K-1} \\ X_{K-1} & -X_{K-1} \end{pmatrix}$, avec $X_1 = 1$,

- $Y_K=\begin{pmatrix} Y_{K-1} & -Y_{K-1} \\ -Y_{K-1} & -Y_{K-1} \end{pmatrix}$, avec $Y_1 = -1$, - $Z_K=\begin{pmatrix} Z_{K-1} & -Z_{K-1} \\ -Z_{K-1} & -Z_{K-1} \end{pmatrix}$, avec $Z_1 = 1$, et

- $U_K=\begin{pmatrix} U_{K-1} & U_{K-1} \\ U_{K-1} & -U_{K-1} \end{pmatrix}$, avec $U_1 = 1$.

**6.** Procédé selon la revendication 5, **caractérisé en ce qu'**au i) on constitue une matrice intermédiaire de rang K de type $M_K=\begin{pmatrix} X_K & Y_K \\ Z_K & U_K \end{pmatrix}$.

**7.** Procédé selon l'une des revendications 5 et 6, **caractérisé en ce que** l'on détermine en outre des séquences de codes de Gold étendues, et l'on mélange certaines au moins desdites séquences de codes de Gold étendues à certaines au moins desdites séquences d'éléments de codage déterminées au iii).

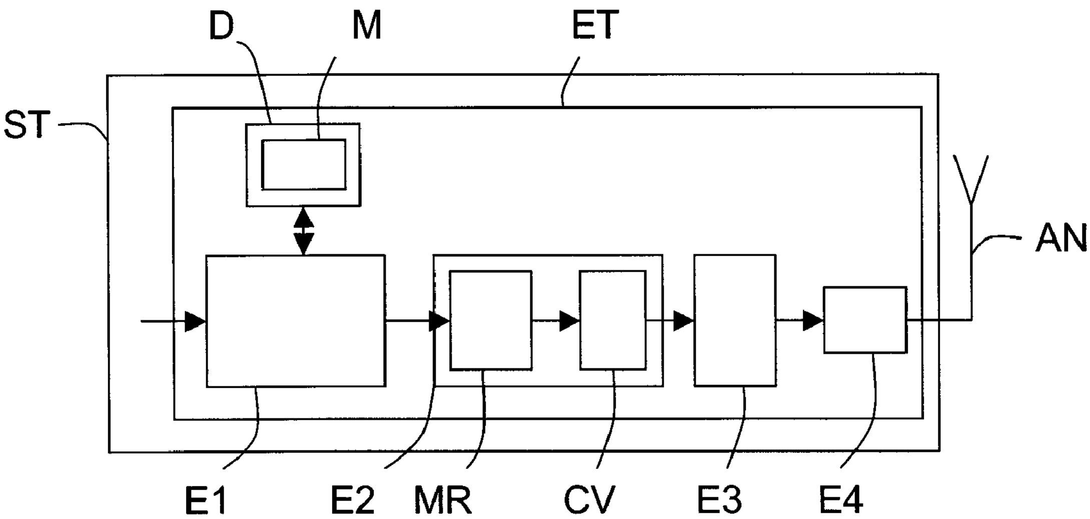


Figure unique

Office européen des brevets

# RAPPORT DE RECHERCHE EUROPEENNE

Numéro de la demande
EP 05 30 0897

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (IPC) |
| X | EVANGELARAS H, KOUKOUVINOS C, SEBERRY J: "Applications of Hadamard Matrices" JOURNAL OF TELECOMMUNICATIONS AND INFORMATION TECHNOLOGY, [Online] vol. 2, 2003, XP002375500 Extrait de l'Internet: URL:http://www.uow.edu.au/~jennie/WEB/03WEB/Evangelaras.pdf> [extrait le 2006-04-03] * page 3, alinéa 1. * ----- | 1-7 | H04J11/00 |
| A | GB 2 378 362 A (* UBINETICS LIMITED) 5 février 2003 (2003-02-05) * page 4, ligne 4 - page 5, ligne 3 * ----- | 1,5 | |
| | | | DOMAINES TECHNIQUES RECHERCHES (IPC) |
| | | | H04J |

Le présent rapport a été établi pour toutes les revendications

| Lieu de la recherche | Date d'achèvement de la recherche | Examinateur |
|---|---|---|
| La Haye | 3 avril 2006 | Amadei, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

6
EPO FORM 1503 03.82 (P04C02)

## ANNEXE AU RAPPORT DE RECHERCHE EUROPEENNE RELATIF A LA DEMANDE DE BREVET EUROPEEN NO.

EP 05 30 0897

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-04-2006

| Document brevet cité au rapport de recherche | Date de publication | Membre(s) de la famille de brevet(s) | Date de publication |
|---|---|---|---|
| GB 2378362 A | 05-02-2003 | CN 1555623 A | 15-12-2004 |
| | | EP 1415422 A1 | 06-05-2004 |
| | | WO 03013037 A1 | 13-02-2003 |

EPO FORM P0460

Pour tout renseignement concernant cette annexe : voir Journal Officiel de l'Office européen des brevets, No.12/82